# EUROPEAN PATENT SPECIFICATION

(11) **EP 1 324 891 B1**
(45) Date of publication and mention of the grant of the patent: **29.06.2005**
(21) Application number: 01979107.8
(22) Date of filing: 09.10.2001
(51) Int. Cl.: B60F 1/04

(54) **ROAD-RAIL VEHICLE**
KOMBINIERTES SCHIENENSTRASSENFAHRZEUG
VEHICULE BIMODAL

(30) Priority: 10.10.2000 NL 1016370
(43) Date of publication of application: 09.07.2003
(73) Proprietor: TECHNISCHE UNIVERSITEIT DELFT, 2628 BL Delft (NL); Evers, Joseph Johannes Maria, 2343 JH Oegstgeest (NL)
(72) Inventor: EVERS, Joseph, Johannes, Maria, NL-2343 JH Oegstgeest (NL)
(74) Representative: Prins, Adrianus Willem, Mr. Ir.
(86) International application number: PCT/NL2001/000741
(87) International publication number: WO 2002/030693

(56) References cited:
- FR-A- 2 467 718
- FR-A- 2 741 582
- US-A- 3 020 858
- US-A- 3 804 025
- US-A- 3 945 326

## Description

The present invention relates to a transport vehicle according to the preamble of claim 1.

Transport vehicles that can travel both on roads and over rails are known. These transport vehicles have both rail wheels and (pneumatic) tires. In the known transport vehicles, use is made of the guiding effect of the rails, but the pneumatic tires take over other tasks from the rail wheels on the rails. Thus, French patent specification No. 2741582 discloses a vehicle in which the pneumatic tires are used for the drive and braking. The pneumatic tires are suspended movably from the rail wheels, and the position of the pneumatic tires is adjusted on the basis of the rail wheels, so that the vehicle follows the rail wheels.

U.S. patent specification 3,874,306 discloses a vehicle in which the pneumatic tires engage with the rails to drive and brake the vehicle. Here, too, the rail wheels have a guiding function, although the pneumatic tires also have some guiding effect in that they bend over the rails to some extent.

German patent specification DE 40 41 970 also discloses a mixed rail wheel-pneumatic tire vehicle. It includes a pressure controller to provide that the rail wheels press on the rails with a constant force. Further, French patent specification No. 2467718 discloses a system for turning a rail wheel-pneumatic tire vehicle onto the rails, such that the rail wheels all end up above the rails.

Transport of goods by road has a variety of generally known inherent drawbacks, in particular with regard to energy consumption, environmental impact, noise production and road congestion. Logistically favorable, however, are its speed, flexibility, fine-meshed structure and the individual handling of the transport units (containers). Traveling on tires, it is possible to maneuver freely at transfer locations, allowing various logistic functions to be realized in a comparatively small space. As far as these logistic aspects are concerned, transport of goods by rail, compared with transport by road, is deficient, certainly when short transport distances are involved. Another drawback of rail transport is the limited grip of steel on steel, which entails very long braking distances. As a consequence, the frequency of travel must necessarily be low, which is logistically unfavorable and moreover disadvantageous to the capacity of the rail. On the other hand, however, an energetically and economically favorable feature of travel on rails is the low rolling resistance.

It is therefore-desirable to arrive at a collective transport system of large capacity, which combines the advantages of the two transport modalities and avoids the disadvantages. Such a transport system should offer an alternative to rail and road transport and could function as a complement thereto.

It is then desirable to profit optimally from the low rolling resistance of travel on rails. The known vehicles with both rail wheels and pneumatic tires do not optimally enable this, because the rail wheels in these vehicles have a guiding effect. Mostly, the rail wheels are fairly small, just large enough for a guiding effect, but not aimed towards obtaining a low rolling resistance. Nonetheless, the suspension of the rail wheels must be made of fairly heavy construction to enable transmission of the guiding forces from the rails. Also, the rail wheels must be provided with flanges for the purpose of guidance. The flanges render the rail wheels heavier, produce undue noise and lead to energy loss.

It is one object of the invention to provide a transport vehicle which has both pneumatic tires and rail wheels, but in which the rail wheels do not need to provide a guiding function.

The invention provides a transport vehicle according to claim 1. In the transport vehicle according to the invention, the rail wheel sets have some freedom of movement transverse to the vehicle chassis. Position determining means measure the position of the transport vehicle transverse to the rails. These means can comprise, for instance, an induction sensor which responds to the metal of the rails, or a dGPS (differential Global Positioning System) receiver, or a receiver of signals from beacons especially arranged for that purpose, etc., or combinations thereof. A control system controls and adjusts the tires on the basis of information obtained from the position determining means, so that the vehicle follows the rails.

The rail wheels are preferably wider than the wheels currently used on rails, so that there is a wider margin for positioning the sets of wheels relative to the rails. The rail wheels are preferably somewhat conically shaped, so that the rail wheel sets of which they are a part are self-centering relative to the rails during travel.

If the transport vehicle moves too far in transverse direction relative to the rails, the rail wheels are preferably automatically retracted, so that the transport vehicle comes to rest completely on the tires.

In one embodiment, the axle pressure of the second wheel sets is controlled, such that each of the first wheel sets always carries a portion of the weight of the transport vehicle and the weight distribution is such that, under normal operating conditions, a stable and slip-free movement is ensured. Upon actuation of the braking mechanism on the first wheel sets, the axle pressure of the second wheel sets, if necessary, is reduced according as the braking force of the first wheel sets increases. In that way, the length of the brake paths corresponds to that of road vehicles, also during travel on rails. The track section in question can therefore facilitate intensive traffic of these hybrid transport vehicles. Traveling in stationary condition, or approximately stationary condition, the greater part of the transport vehicle weight is carried by the rail wheel sets. The energetically favorable effect of the low rolling resistance of travel on rails therefore applies to a large extent to the hybrid transport vehicle as well, provided, naturally, the rails are utilized. During transport over a road or over a transfer location, the rail wheels are pulled up. Then a control system is utilized with which the first wheel sets can be steered independently of rails and which effectuates specified directions about a route to be followed. Depending on the nature of the logistic environment, this control can be automated, but also man-operated, or can be of hybrid automatic/man-operated design. Traveling in this form, the transport vehicle has the flexibility of a vehicle moving on tires and not bound to rails nor to any other fixed track section. In summary, the invention provides a transport vehicle which combines the advantages of transport on tires with that of rail transportation, while in use the disadvantages thereof can be avoided to a large extent.

To clarify the energetic advantage that can be obtained according to the invention, reference is made to the table below, representing a comparative overview for the transport of sea containers. The top line in this table gives an indication of the required power for a transport vehicle without rail wheels at a speed of 100 km/hour, which is the normal speed of an articulated truck on highways.

| *Indication of energetic power and energy consumption* | | | |
|---|---|---|---|
| | *average stationary condition* | | *heavy loading* |
| *speed* | *required power* | *consumption relative to 100* | *required power* |
| 100 km/h | 244 kW | 100% | 930 kW |
| 50 km/h | 72 kW | 60% | 400 kW |
| 10 km/h | 13 kW | 50% | 75 kW |
| *50 km/h | 38 kW | 33% | 350 kW |

The next two lines of the table give an energetic indication for a transport vehicle without rail wheels at a speed of 50 and 10 km/h, respectively. The bottom line gives an energetic indication for a hybrid transport vehicle which, at a speed of 50 km/h, is supported for 60% on the rail wheels. The column "average stationary condition" reflects the situation without gradient, given normal loading and some wind action. The condition "heavy loading" involves heavy loads, a gradient of 3% and strong head wind. In that circumstance, the speed could be limited to 30 km/h. It is noted that the kinetic energy and the effect of variations in speed has not been taken into account. For a manned vehicle, the factor of speed is of great importance, in view of the high personnel costs and the regulations regarding driving times. For an unmanned vehicle, speed plays a much lesser role, so that an energetically advantageous manner of driving can be taken into account more. Given a speed of 50 km/h and a support of 60% on the rail wheels, already a very considerable energy saving is obtained, compared with a robotic vehicle without rail wheels, and certainly when compared with a conventional articulated truck. The speed of 10 km/h is relevant for travel at container terminals.

Although the transport vehicle could be manned, important advantages are obtained precisely when the transport vehicle functions as an "automatically guided vehicle" in an open "intelligent logistic system", in which the displacements on the connecting track sections, the maneuvers on the transfer locations, and logistic handling all proceed in coordination. In principle, any vehicle is welcome, provided that standards for driving properties, steering and safety are met. Admission is arranged by communication via a system of "dynamic slotting".

These and other objects and advantages of the transport vehicle according to the invention will be further described with reference to the accompanying drawings.
Fig. 1 shows a hybrid transport vehicle;
Fig. 2 shows braking provisions in a hybrid transport vehicle;
Fig. 3 shows a control system in a hybrid transport vehicle.

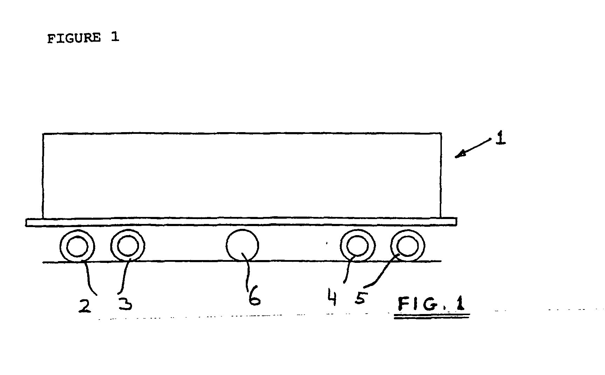

In the accompanying Figure 1, an example of the hybrid transport vehicle in a design as a robotic vehicle is represented in side elevation. The robotic transport vehicle is provided with two front and two rear first wheel sets, with a second wheel set between them. The wheel sets 2-5 are provided with wheels with pneumatic tires, while the wheel set 6 is provided with steel rail wheels. The wheels of one of the front wheel sets and of one of the rear wheel sets are motor-driven. The other first wheel sets and the second wheel set are not driven. The transport vehicle is steered by the wheel sets 2-5. The wheel set 6 is suspended so as to be "track-following" in the sense to be described hereinafter. The rail wheels are brought into a highest position when the robotic vehicle, traveling on the pneumatic tires, is moved over the road, and further under the circumstances mentioned hereinafter. The rail wheels can be lowered when the robotic carrying vehicle is moved over rails; this situation is represented in Fig. 1.

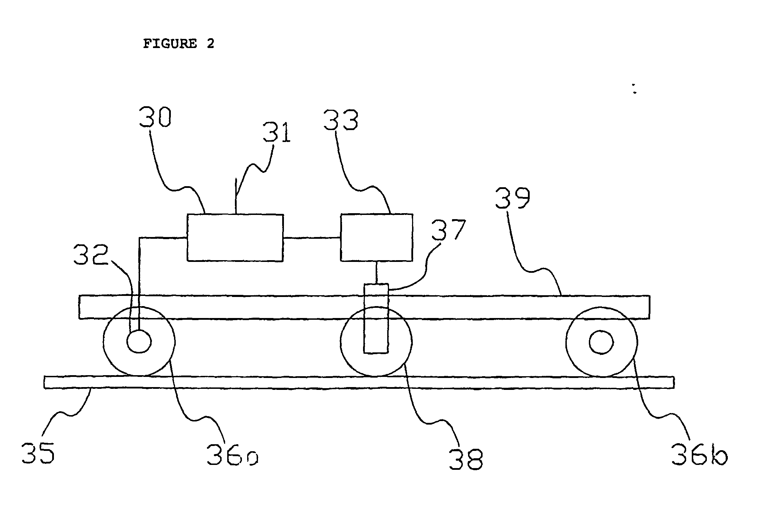

Fig. 2 shows braking provisions in the robotic carrying vehicle. Schematically shown are rails 35, wheels 36a,b with pneumatic tires, a rail wheel 38, a chassis 39, a brake control 30 with a control signal input 31, a controlled brake 32 on one of the wheels 36a with pneumatic tires, a pressure controller 33 and a pressure control energization 37. Naturally, all parts are connected with the chassis 39, but this is not further shown for the sake of clarity. In operation, the pressure controller 33 regulates the pressure with which pressure control energization 37 presses the rail wheels 38 on the rails 35. When a brake signal comes in at input 31, brake control 30 transmits a signal to the controlled brake 32 to effect braking. In addition, in that case, the brake control transmits a signal to the pressure controller 33 to reduce the pressure on the rail wheels 38.

The pressure at which the rail wheels are pressed against the rails determines the extent of relief of the pneumatic tire wheels. The wheel pressure of the rail wheels can be automatically controlled. On straight rail tracks and in gentle curves, in stationary condition, the wheel pressure of the rail wheels is controlled such that the wheel sets 2-5 at each end jointly carry, for instance, at least 40% of the vehicle weight. In the event of braking, the pressure on the rails is reduced or removed entirely. This last is also the case in sharp bends, so that the effects of the favorable grip of the tires on the road surface are maintained. When, through whatever cause, the deviation of the transport vehicle relative to the rails becomes too large, the rail wheels are pulled up until the transport vehicle is completely on the track again. The invention is not limited to the exemplary embodiment described here with reference to the drawing; many variants are possible. Instead of one, for instance two rail wheel sets can be arranged in the middle, optionally suspended in tandem in a common frame. Also, instead of the double first wheel sets at the vehicle ends, single first wheel sets can be arranged. Also possible is a variant as a robotic trailer.

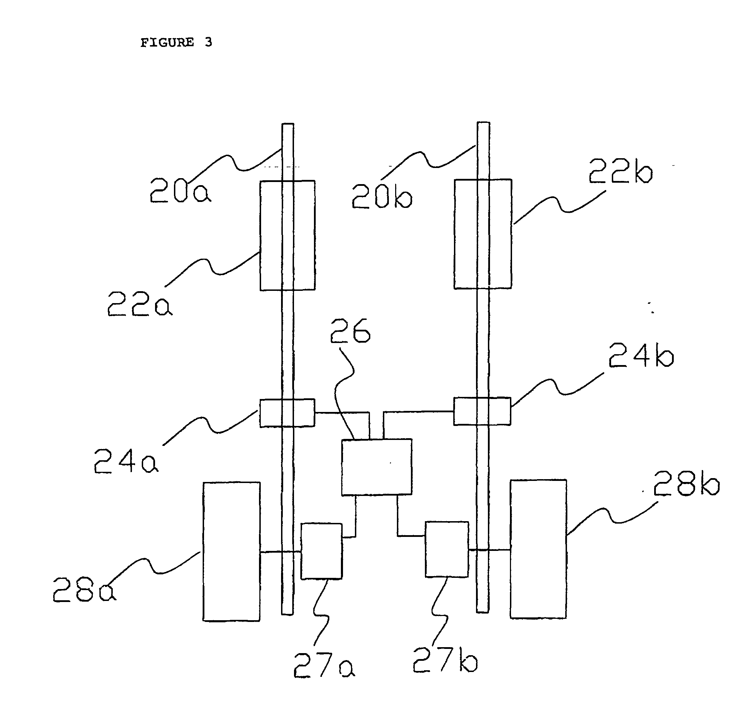

Fig. 3 shows a control system in a hybrid transport vehicle. The figure schematically shows rails 20a, b, rail wheels 22a, b, sensors 24a,b, a controller 26, steering energization 27a,b and wheels 28a,b with tires. These parts-are connected with a chassis of the transport vehicle (not shown). In operation, the sensors 24a,b detect the presence of the rails 20a,b, and if rails 20a,b are present, the sensors measure the position of the transport vehicle relative to the rails in transverse direction. Depending on the sensor measurements, the controller 26 controls the steering 27a,b of the wheels 28a,b with tires, so that the transport vehicle follows the rails 20a,b. For this purpose, instead of a sensor for the rails, other means can be used, such as a dGPS receiver, in combination with an electronic card in which the position of the rails in dGPS coordinates is stored, or a receiver of beacon signals from beacons arranged along or between the rails, etc., or combinations of these kinds of position determining means.

A technical aspect is that the hybrid transport vehicle is provided with sensor means to determine the presence of the rails and, if this is the case, to measure the position of the transport vehicle relative to the rails in transverse direction. Induction sensors are eligible for this purpose. When the transport vehicle exhibits a deviation from the centered position on the rails that is greater than a predetermined value, or when the presence of the rails has not been established, the rail wheels are pulled up, or remain in pulled-up position. When the presence of the rails has been established and the transport vehicle exhibits a deviation relative to the centered position on the rails that is smaller than a predetermined value, and moreover the control instructions give cause therefor, the rail wheels are lowered. The first wheel sets (that is, the wheel sets running on tires) are equipped with a conventional control system, such that when the road surface is provided with rails, these rails can be followed, using the sensor measurements mentioned. In this control, also the positions of the second wheel sets can be taken into account. As already mentioned, the hybrid transport vehicle is provided with at least one rail wheel set. Each rail wheel set is suspended separately, or else in tandem with another rail wheel set, so as to be "track-following" in the sense that both swiveling and some transverse movement are possible. Steering and suspension are such that the occurrence of transverse forces is avoided to a large extent. By analogy with conventional rails, the rail wheels are slightly conically shaped, but are preferably wider, while the conventional wheel flanges are preferably omitted. The rail wheels in a rail wheel set are coupled as regards rotation. This can be effected by mounting them rigidly on a common shaft. Another possibility is for the two rail wheels suspended opposite each other to be mounted rigidly on their own shaft and to couple these shafts homokinetically in the middle of the transport vehicle. By placing the shafts at that point higher than the wheel center, it can be provided that the rail wheels are supported "horizontally" on the rails. The rails then need to project only little above the road surface. In this set-up, there is no need for rail switch points to cause the transport vehicle to shift to a different route. The sound of flanges grating along the rails is absent. The transport vehicle is further equipped with a control system with which the first wheel sets can be steered independently of rails and which effectuates specified directions about a route to be followed. In this set-up, no rails are needed on slip roads nor at the logistic stations and the like.

The invention relates to constructional variants for different areas of application, for instance as an alternative to road traffic, as described here, as a transport modality for urban transport of goods, as a transport modality for logistic complexes (such as Schiphol airport, in particular the underground logistic system), but also for urban and regional passenger transportation.

## Claims

1. A transport vehicle (1) equipped with a number of first wheel sets having wheels provided with tires (2,3,4,5;28a,28b;36a,36b), to which steering means and driving means, if any, are coupled to enable the transport vehicle (1) to be moved over a road surface, further comprising at least one second wheel set having rail wheels (6;22a,22b;38), which rail wheels can be moved up and down in vertical direction so as to enable, in the lowered position, a movement of the transport vehicle (1) over rails (20a,20b;35) disposed in the road surface, while simultaneously weight-relieving the wheels with tires, whereby the rail wheel sets are suspended such that movement transverse relative to the transport vehicle (1) is possible, **characterized in that** position determining means (24a,24b) are present to determine the position of the transport vehicle (1) relative to the rails (20a,20b;35) in a direction transverse to the direction of travel of the transport vehicle (1) and that a control system (26) is present which, depending on measurements of the position determining means (24a,24b), steers the wheels with tires (2,3,4,5;28a,28b;36a,36b), such that when the road surface is provided with rails (20a,20b;35) the transport vehicle (1) follows these rails.

2. A transport vehicle according to claim 1, **characterized in that** it is arranged to pull up the rail wheels or keep them in pulled-up position in response to detection of the transport vehicle exhibiting a deviation relative to the centered position on the rails that is greater than a predetermined value, or when the presence of the rails has not been established.

3. A transport vehicle according to any one of the preceding claims, **characterized in that** the transport vehicle controls the axle pressure of the second wheel sets, such that each of the first wheel sets always carries a portion of the weight of the transport vehicle and that the weight distribution is such that, under normal operating conditions, a stable and slip-free movement is ensured.

4. A transport vehicle according to claim 3, **characterized in that** the first wheel sets are provided with a braking mechanism (32) and that upon actuation of the braking mechanism (32) on the first wheel sets, a system activated by the braking mechanism ensures that when the second wheel sets are lowered, the axle pressure of the second wheel sets is reduced according as the braking force of the first wheel sets increases.

5. A transport vehicle according to claim 4, **characterized in that** at both ends of the transport vehicle first wheel sets having wheels provided with pneumatic tires are arranged, that all first wheel sets are provided with a braking mechanism (32), and all first wheel sets, optionally with the exception of one wheel set, are steerable.

6. A transport vehicle according to claim 1, **characterized in that** it is arranged, in response to detection of the presence of the rails, and when it is detected that the transport vehicle exhibits a deviation relative to the centered position on the rails that is smaller than a predetermined value, to automatically lower the rail wheels, provided that the control instructions give cause therefor.

7. A transport vehicle according to any one of the preceding claims, **characterized in that** each second wheel set is provided with two slightly conically shaped rail wheels, which are wider than the wheels currently used on rails, and which are coupled as regards rotation.

8. A transport vehicle according to any one of the preceding claims, **characterized in that** it is equipped with a control system (26) for steering the first wheel sets independently of rails, and which is arranged for effectuating specified directions about a route to be followed, without making use of switches in the rails.

## Patentansprüche

1. Transportfahrzeug (1), das mit einer Anzahl von ersten Radsätzen ausgerüstet ist, die mit Reifen (2, 3, 4, 5; 28a, 28b; 36a, 36b) versehene Räder aufweisen, an die gegebenenfalls Lenkeinrichtungen und Antriebseinrichtungen gekoppelt sind, wodurch es dem Transportfahrzeug (1) ermöglicht wird, über eine Straßenoberfläche gefahren zu werden, und ferner mindestens einen zweiten Radsatz mit Schienenrädern (6; 22a, 22b; 38) aufweist, die in einer vertikalen Richtung nach oben und unten verfahrbar sind, so daß sie in der abgesenkten Position ein Fahren des Transportfahrzeuges (1) über Schienen (20a, 20b; 35) ermöglichen, die in der Straßenoberfläche angeordnet sind, und gleichzeitig die bereiften Räder entlasten, wodurch die Schienenradsätze so aufgehängt sind, daß eine Bewegung in Querrichtung zum Transportfahrzeug (1) ermöglicht wird, **dadurch gekennzeichnet, daß** Positionsbestimmungseinrichtungen (24a, 24b) zum Bestimmen der Position des Transportfahrzeugs (1) relativ zu den Schienen (20a, 20b; 35) in einer Richtung quer zur Fahrtrichtung des Transportfahrzeugs (1) vorhanden sind, und daß ein Steuersystem (26) vorhanden ist, das in Abhängigkeit von Messungen der Positionsbestimmungseinrichtungen (24a, 24b) die Räder mit Reifen (2, 3, 4, 5; 28a, 28b; 36a, 36b) so lenkt, daß, wenn die Straßenoberfläche mit Schienen (20a, 20b; 35) versehen ist, das Transportfahrzeug (1) diesen Schienen folgt.

2. Transportfahrzeug gemäß Anspruch 1, **dadurch gekennzeichnet, daß** es so ausgelegt ist, daß es im Ansprechen auf die Erfassung einer Abweichung des Transportfahrzeugs in Bezug auf die zentrierte Position auf den Schienen, die größer als ein vorgegebener Wert ist, oder falls das Vorhandensein der Schienen nicht festgestellt wurde, die Schienenräder hochzieht bzw. in der hochgezogenen Position hält.

3. Transportfahrzeug gemäß einem der vorhergehenden Ansprüche, **dadurch gekennzeichnet, daß** das Transportfahrzeug den Achsdruck der zweiten Radsätze so steuert, daß jeder der ersten Radsätze stets einen Teil des Gewichts des Transportfahrzeugs trägt, und die Gewichtsverteilung derart ist, daß unter normalen Betriebsbedingungen eine stabile und schlupffreie Bewegung gewährleistet ist.

4. Transportfahrzeug gemäß Anspruch 3, **dadurch gekennzeichnet, daß** die ersten Radsätze mit einem Bremsmechanismus (32) versehen sind, und daß bei einer Betätigung des Bremsmechanismus (32) an den ersten Radsätzen ein durch den Bremsmechanismus aktiviertes System dafür sorgt, daß beim Absenken der zweiten Radsätze der Achsdruck der zweiten Radsätze entsprechend der Zunahme der Bremskraft der ersten Radsätze verringert wird.

5. Transportfahrzeug gemäß Anspruch 4, **dadurch gekennzeichnet, daß** an beiden Enden des Transportfahrzeugs erste Radsätze angeordnet sind, die mit Luftreifen versehene Räder aufweisen, daß alle ersten Radsätze mit einem Bremsmechanismus (32) versehen sind; und alle ersten Radsätze, optional mit Ausnahme eines Radsatzes, lenkbar sind.

6. Transportfahrzeug gemäß Anspruch 1, **dadurch gekennzeichnet, daß** es so ausgelegt ist, daß es die Schienenräder im Ansprechen auf die Erfassung des Vorhandenseins der Schienen, und wenn erfaßt wird, daß das Transportfahrzeug eine Abweichung in Bezug auf die zentrierte Position auf den Schienen aufweist, die geringer als ein vorgegebener Wert ist, unter der Bedingung, daß die Steueranweisungen eine Veranlassung dazu geben, automatisch absenkt.

7. Transportfahrzeug gemäß einem der vorhergehenden Ansprüche, **dadurch gekennzeichnet, daß** jeder zweite Radsatz mit zwei leicht kegelförmigen Schienenrädern versehen ist, die breiter als die gegenwärtig auf Schienen verwendeten Räder sind und im Hinblick auf ihre Drehung miteinander gekoppelt sind.

8. Transportfahrzeug gemäß einem der vorhergehenden Ansprüche, **dadurch gekennzeichnet, daß** es mit einem Steuersystem (26) zum Lenken der ersten Radsätze unabhängig von Schienen ausgerüstet ist, welches dazu ausgelegt ist, bestimmte Anweisungen bezüglich einer zu fahrenden Route auszuführen, ohne Weichen in den Schienen zu verwenden.

## Revendications

1. Un véhicule de transport (1) équipé d'un certain nombre de premiers jeux de roues dont les roues sont munies de bandages pneumatiques (2, 3, 4, 5 ; 28a, 28b ; 36a, 36b) et auxquelles sont couplés, s'ils sont présents, des moyens de direction et des moyens d'entraînement, pour permettre au véhicule de transport (1) d'être déplacé sur une surface de route ou de roulage, comprenant en outre au moins un deuxième jeu de roues dont les roues sont des roues ferroviaires (6 ; 22a, 22b ; 38), qui peuvent être déplacées vers le haut ou vers le bas dans la direction verticale, de façon à permettre, dans la position abaissée, un déplacement du véhicule de transport (1) sur des rails (20a, 20b ; 35), disposés dans la surface de route, tout en déchargeant simultanément les roues munies de bandages pneumatiques, de sorte que les jeux de roues ferroviaires soient suspendus de manière qu'un déplacement transversal par rapport au véhicule de transport (1) soit possible, **caractérisé en ce que** des moyens (24a, 24b) de détermination de position sont présents pour déterminer la position du véhicule de transport (1) par rapport aux rails (20a, 20b ; 35) dans une direction transversale à la direction de déplacement du véhicule de transport (1), et **en ce qu'**est présent un système de contrôle (26) qui, en fonction des mesures des moyens (24a, 24b) de détermination de position, braque les roues à bandages pneumatiques (2, 3, 4, 5 ; 28a, 28b ; 36a, 36b), de sorte que, dans le cas où la surface de route est munie de rails (20a, 20b ; 35), le véhicule de transport (1) suive ces rails.

2. Un véhicule de transport selon la revendication 1, **caractérisé en ce qu'**il est agencé pour tirer les roues ferroviaires vers le haut ou pour les maintenir dans la position tirée vers le haut en réponse à la détection du fait que le véhicule de transport présente un écart par rapport à la position centrée sur les rails qui est supérieur à une valeur prédéterminée, ou lorsque la présence des rails n'a pas été établie.

3. Un véhicule de transport selon l'une quelconque des revendications précédentes, **caractérisé en ce que** le véhicule de transport contrôle la pression d'essieu des deuxièmes jeux de roues, de sorte que chacun des premiers jeux de roues porte toujours une partie du poids du véhicule de transport et que la distribution du poids soit telle que, dans des conditions de fonctionnement normales, un déplacement stable et exempt de glissement soit assuré.

4. Un véhicule de transport selon la revendication 3, **caractérisé en ce que** les premiers jeux de roues sont munis d'un mécanisme de freinage (32) et qu'en cas d'actionnement du mécanisme de freinage (32) sur les premiers jeux de roues, un système activé par le mécanisme de freinage assure que, lorsque les deuxièmes jeux de roues sont abaissés, la pression d'essieu des deuxièmes jeux de roues est réduite en correspondance à l'augmentation de la force de freinage des premiers jeux de roues.

5. Un véhicule de transport selon la revendication 4, **caractérisé en ce qu'**aux deux extrémités du véhicule de transport, sont agencés des premiers jeux de roues ayant des roues munies de bandages pneumatiques, **en ce que** tous les premiers jeux de roues sont munis d'un mécanisme de freinage (32), et tous les premiers jeux de roues, à l'exception le cas échéant d'un jeu de roues, sont directionnels.

6. Un véhicule de transport selon la revendication 1, **caractérisé en ce qu'**il est agencé, en réponse à la détection de la présence des rails, et lorsqu'il est détecté que le véhicule de transport présente un écart par rapport à la position centrée sur les rails qui est inférieure à une valeur prédéterminée, pour abaisser automatiquement les roues ferroviaires, à condition que les instructions de commande en donnent l'ordre.

7. Un véhicule de transport selon l'une quelconque des revendications précédentes, **caractérisé en ce que** chaque deuxième jeu de roues est muni de deux roues ferroviaires de forme légèrement conique, qui sont plus larges que les roues habituellement utilisées sur des rails, et qui sont couplées en rotation.

8. Un véhicule de transport selon l'une quelconque des revendications précédentes, **caractérisé en ce qu'**il est équipé d'un système de contrôle (26) pour braquer les premiers jeux de roues indépendamment des rails, et qui est agencé pour suivre des directions spécifiées sur une route à suivre, sans faire usage des aiguillages dans les rails.
